# FASCICULE DE BREVET EUROPEEN

(11) **EP 1 884 649 B1**
(45) Date de publication et mention de la délivrance du brevet: **22.11.2017**
(21) Numéro de dépôt: 07113005.8
(22) Date de dépôt: 24.07.2007
(51) Int. Cl.: F01D 9/06, F02K 1/38, F02K 3/06, F02K 1/30

(54) **Turbomachine à double flux à variation de sa section de col par moyens d'injection d'air**
Mantelstromtriebwerk mit variablem engsten Querschnitt mittels Luft-Einspritzung
Turbofan with variation of its throat section by means of air injection

(30) Priorité: 01.08.2006 FR 0653241
(43) Date de publication de la demande: 06.02.2008
(73) Titulaire: SNECMA, 75015 Paris (FR)
(72) Inventeur: BEUTIN, Bruno, 91000, EVRY (FR); LANDRE, Eric, 92130, ISSY LES MOULINEAUX (FR)
(74) Mandataire: Boura, Olivier

(56) Documents cités:
- EP-A2- 1 004 759
- US-A1- 5 435 127
- US-A1- 6 021 637
- US-A1- 2003 182 925
- US-B1- 6 308 740

## Description

### Arrière-plan de l'invention

La présente invention se rapporte au domaine général des tuyères d'éjection des gaz équipant les turbomachines à double flux, et plus particulièrement à une turbomachine ayant une tuyère fixe dont la section de col peut néanmoins varier de façon artificielle.

Une turbomachine à double flux se compose notamment d'un moteur à turbine à gaz muni d'une soufflante disposée selon un axe longitudinal de la turbomachine et d'une nacelle annulaire centrée sur l'axe longitudinal de la turbomachine et entourant le moteur, la nacelle ayant une extrémité amont entourant la soufflante du moteur et une extrémité aval formant une tuyère pour l'éjection des gaz issus de la turbomachine. On appelle « section de col » la section transversale de la tuyère qui est la plus faible sur toute la longueur de la tuyère.

Il est connu qu'en faisant varier la section de col de la tuyère d'une turbomachine, il est possible de contrôler le débit de la soufflante de façon à la placer dans des conditions de fonctionnement correspondant à un rendement optimum quels que soient les régimes de la turbomachine. L'utilisation de tuyères d'éjection à section géométriquement variable est ainsi courante dans les applications militaires. Les techniques employées font généralement recours à des volets disposés dans le prolongement de l'extrémité aval de la paroi externe de la tuyère et dont le braquage permet de réduire ou d'augmenter la section de la tuyère.

Or, de telles techniques sont difficiles à implanter sur des tuyères de turbomachines civiles. Ceci est notamment dû aux contraintes liées à l'installation de la nacelle par rapport à l'aile de l'avion, à la garde au sol, aux épaisseurs et à la forme des bords de fuite de la nacelle. En outre, de telles tuyères à section variable ont un coût de fabrication relativement élevé.

Aussi, les tuyères utilisées dans le civil ont généralement une section de col géométriquement fixe qui est optimisée pour le vol de croisière qui représente la plus grande partie de la mission d'un avion. Il en résulte que les tuyères à section de col fixe fonctionnent de manière dégradée à haut régime de fonctionnement (correspondant au décollage et à la phase d'ascension de l'avion) et à bas régime de fonctionnement (correspondant à la descente, à la phase d'approche et au mode ralenti en vol de l'avion).

Les documents US 6,308,740 et US 6,021,637 décrivent des tuyères dont la section de col peut être fermée de façon artificielle.

### Objet et résumé de l'invention

La présente invention a donc pour but principal de pallier de tels inconvénients en proposant une turbomachine à double flux ayant une tuyère géométriquement fixe mais dont la section de col peut cependant varier de façon artificielle selon les régimes de fonctionnement.

Conformément à l'invention, ce but est atteint grâce à une turbomachine selon la revendication 1 et un procédé selon la revendication 8. Ainsi, par injection d'air en aval de la section de col de la tuyère, il est possible d'augmenter artificiellement le débit d'air traversant cette section, ce qui revient à ouvrir la section de la tuyère à partir de la même section géométrique de col. Cette variation artificielle de la section de col présente les avantages de nécessiter peu de pièces, d'être de montage facile et d'être compatible avec les turbomachines existantes. Encore un autre avantage réside dans la possibilité d'obtenir un gain acoustique.

La turbomachine selon l'invention comporte en outre des moyens pour prélever et comprimer de l'air extérieur à la turbomachine et des moyens d'injection de l'air prélevé au voisinage de la section de col selon une direction sensiblement perpendiculaire voire opposée à celle du flux d'air s'écoulant dans le canal d'écoulement du flux froid de façon à fermer artificiellement la section de col par obstruction aérodynamique du débit d'air traversant celle-ci.

Ainsi, par injection d'air au voisinage de la section de col de la tuyère, il est possible de diminuer artificiellement le débit d'air traversant cette section, ce qui revient à fermer la section de col de la tuyère à partir de la même section géométrique de col.

Selon un arrangement particulier, les moyens de prélèvement d'air comportent une pluralité d'orifices d'entrée s'ouvrant dans le canal d'écoulement du flux froid et débouchant dans un collecteur annulaire logé à l'intérieur du moteur à turbine à gaz, ledit collecteur étant relié à une entrée d'une pompe ayant une sortie débouchant à l'intérieur du moteur.

Le moteur à turbine à gaz peut comporter un capot primaire centré sur l'axe longitudinal de la turbomachine et un corps central disposé concentriquement à l'intérieur du capot primaire.

Selon un mode de réalisation, le capot primaire présente à son extrémité aval une ouverture annulaire s'ouvrant à l'intérieur du moteur et débouchant vers le canal d'écoulement du flux froid en aval de la section de col de la tuyère de façon à permettre une évacuation de l'air prélevé dans le canal d'écoulement du flux froid par différentiel de pression.

Selon un autre mode de réalisation, le capot primaire présente à son extrémité aval une pluralité d'orifices de sortie débouchant vers le canal d'écoulement du flux froid en aval de la section de col de la tuyère et reliés à la sortie de la pompe par un diffuseur annulaire de façon à permettre une évacuation de l'air prélevé dans le canal d'écoulement du flux froid.

Une vanne de commande peut être avantageusement intercalée entre le collecteur et la pompe afin de réguler le débit d'air prélevé et injecté en aval de la section de col.

Selon un arrangement particulier, les moyens de prélèvement d'air extérieur comportent au moins une entrée d'air extérieur s'ouvrant à l'extérieur de la turbomachine et reliée à une entrée d'une pompe ayant un module de compression et logée à l'intérieur du moteur à turbine à gaz.

Selon un autre arrangement particulier, la pompe possède une sortie reliée par l'intermédiaire d'un diffuseur annulaire à une pluralité d'injecteurs d'air débouchant dans le canal d'écoulement du flux froid au voisinage de la section de col selon une direction sensiblement perpendiculaire voire opposée à celle du flux d'air s'écoulant dans le canal d'écoulement du flux froid.

Une vanne de commande peut être avantageusement intercalée entre l'entrée d'air extérieur et la pompe afin de réguler le débit d'air prélevé à l'extérieur et injecté au voisinage de la section de col.

L'invention concerne également un procédé de variation de la section de col d'une tuyère à section fixe de turbomachine à double flux, caractérisé en ce qu'il consiste, pour ouvrir artificiellement la section de col, à prélever de l'air dans le canal d'écoulement du flux froid de la turbomachine en amont de la section de col et à l'injecter dans la tuyère en aval de la section de col afin d'en augmenter la section efficace, et, pour fermer artificiellement la section de col, à prélever de l'air extérieur à la turbomachine, à le comprimer et à l'injecter au voisinage de la section de col selon une direction sensiblement perpendiculaire voire opposée à celle du flux d'air s'écoulant dans le canal d'écoulement du flux froid de façon à réaliser une obstruction aérodynamique du débit d'air traversant la section de col.

Les phases d'ouverture et de fermeture de la section de col sont de préférence pilotées en fonction des régimes de fonctionnement de la turbomachine.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue très schématique et en coupe longitudinale d'une turbomachine selon l'invention ;
- la figure 2 est une loupe d'un détail de la figure 1 montrant des moyens d'injection de l'air en aval de la section de col selon un mode de réalisation ;
- la figure 3 est une autre loupe montrant des moyens d'injection de l'air en aval de la section de col selon un autre mode de réalisation ; et
- la figure 4 est une loupe d'un autre détail de la figure 1 montrant des moyens d'injection d'air au voisinage de la section de col selon un mode de réalisation.

### Description détaillée d'un mode de réalisation

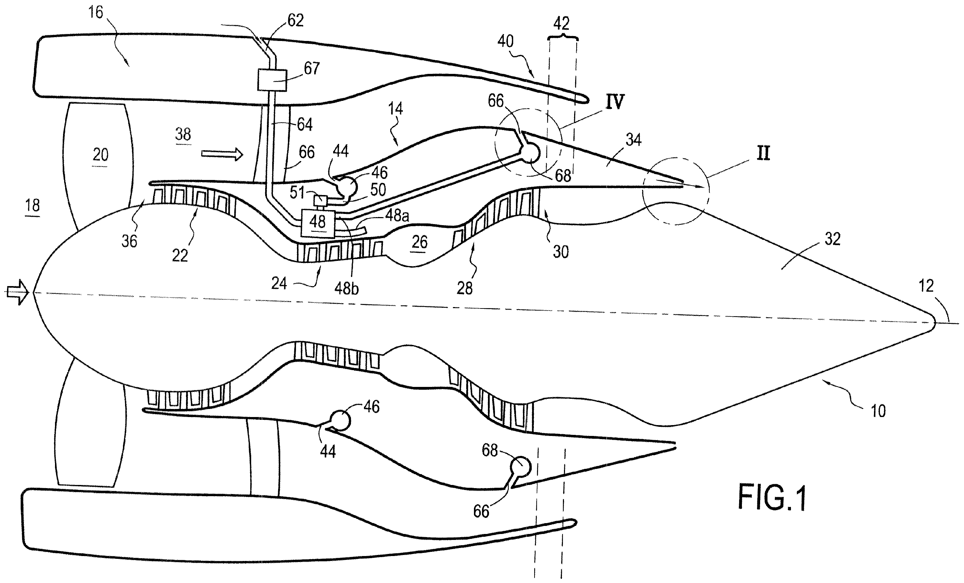

La figure 1 représente de façon très schématique et en coupe longitudinale une turbomachine à double flux 10 selon l'invention. Celle-ci possède un axe longitudinal 12 et se compose d'un moteur à turbine à gaz 14 et d'une nacelle annulaire 16 centrée sur l'axe 12 et disposée concentriquement autour du moteur.

D'amont en aval selon le sens d'écoulement d'un flux d'air traversant la turbomachine, le moteur 14 comprend une entrée d'air 18, une soufflante 20, un compresseur basse-pression 22, un compresseur haute-pression 24, une chambre de combustion 26, une turbine haute-pression 28 et une turbine basse-pression 30, chacun de ces éléments étant disposé selon l'axe longitudinal 12.

Le moteur à turbine à gaz comprend en outre un corps central 32 centré sur l'axe longitudinal 12 de la turbomachine et un capot primaire 34 également centré sur l'axe 12 et entourant le corps central de façon à former en aval de la soufflante 20 un canal annulaire 36 d'écoulement d'un flux chaud appelé canal primaire.

La nacelle 16 de la turbomachine entoure le capot primaire 34 du moteur et délimite avec celui-ci un canal annulaire 38 d'écoulement d'un flux froid appelé canal secondaire.

Le cheminement de l'air au travers de la turbomachine est le suivant. L'air est admis dans la turbomachine par l'entrée d'air 18. En aval de la soufflante 20, le flux d'air se divise en une partie qui s'écoule dans le canal secondaire 38 et une autre qui emprunte le canal primaire 36. Dans ce dernier, l'air est comprimé par les compresseurs 22, 24, mélangé à du carburant dans la chambre de combustion 26 et brûlé. Les gaz issus de cette combustion entraînent les turbines haute-pression 28 et basse-pression 30.

A son extrémité amont, la nacelle 16 entoure la soufflante 20 du moteur. Quant à l'extrémité aval de la nacelle, elle est fixe et forme une tuyère 40 pour l'éjection des flux gazeux issus de la turbomachine. La tuyère est délimitée radialement à l'extérieur par l'extrémité aval de la nacelle et à l'intérieur par le capot primaire 34. La tuyère présente une section de col 42 qui correspond à sa section transversale minimale.

Selon l'invention, il est prévu de faire varier (c'est-à-dire d'ouvrir ou de fermer) artificiellement cette section de col 42 qui est géométriquement fixe.

Pour ouvrir artificiellement la section de col 42, l'invention prévoit de prélever de l'air dans le canal secondaire 38 en amont de la section de col et de l'injecter dans la tuyère 40 en aval de la section de col afin d'en augmenter la section efficace. Par une telle opération, on augmente en effet le débit d'air traversant la section de col, ce qui a pour conséquence, à vitesse d'écoulement inchangée, d'augmenter de façon artificielle la section de col (le débit d'air est en effet proportionnel à la section traversée par l'air que multiplie la vitesse de l'air).

Un mode de réalisation de mise en oeuvre d'une telle ouverture de la section de col est maintenant décrit en liaison avec les figures 1 à 3.

Les moyens de prélèvement d'air sont formés par une pluralité d'orifices d'entrée 44 s'ouvrant dans le canal secondaire 38. Ces orifices d'entrée sont formés au travers du capot primaire 34 et sont de préférence régulièrement espacés autour de l'axe longitudinal 12 de la turbomachine. Comme représenté sur la figure 1, ils peuvent être inclinés dans le sens d'écoulement de l'air dans le canal secondaire.

Les orifices d'entrée 44 débouchent dans un collecteur annulaire d'air 46 logé à l'intérieur du moteur 14 et centré sur l'axe longitudinal 12. Ce collecteur d'air 46 est relié à une entrée d'une pompe 48 également logée dans le moteur par l'intermédiaire d'au moins un conduit 50. La pompe 48 présente également une sortie d'air 48a. La pompe permet d'aspirer l'air mais elle peut également intégrer un module de compression de l'air. De préférence, une vanne de commande 51 est intercalée entre le collecteur d'air 46 et la pompe 48 afin de réguler le débit d'air prélevé et injecté en amont de la section de col en fonction des régimes de fonctionnement de la turbomachine.

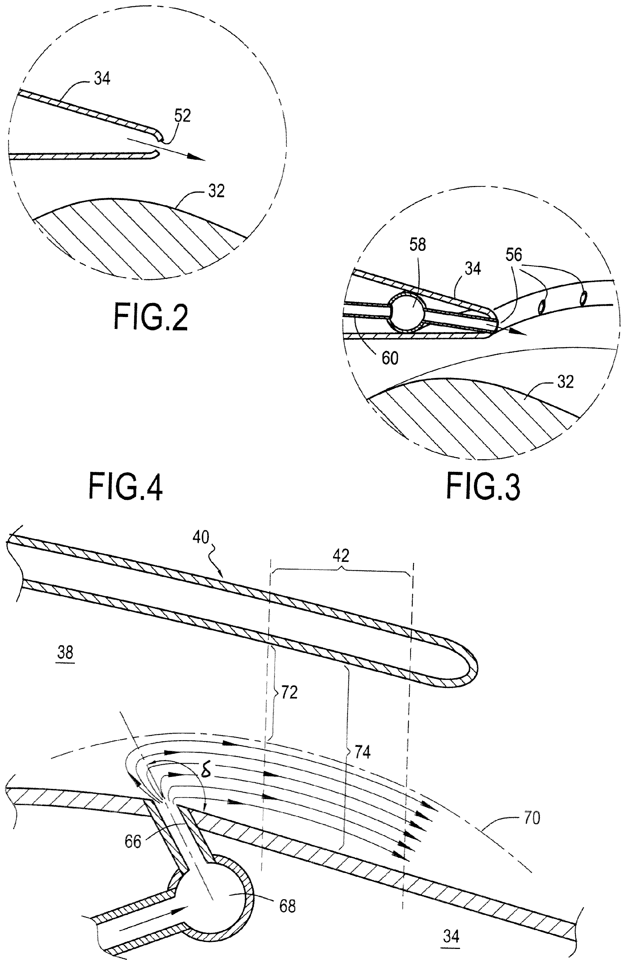

Dans le mode de réalisation des figures 1 et 2, les moyens d'injection de l'air dans la tuyère 40 en aval de sa section de col 42 se composent d'une ouverture (ou fente) annulaire 52 formée à l'extrémité aval du capot primaire 34, cette ouverture s'ouvrant à l'intérieur du moteur et débouchant dans la tuyère en aval de sa section de col. La pression de l'air étant plus importante à l'intérieur du moteur qu'à l'extérieur, l'air aspiré par la pompe 48 se propage naturellement d'amont en aval à l'intérieur du moteur et est injecté dans la tuyère au niveau de l'ouverture 52 du capot primaire. On notera que si le différentiel de pression entre l'intérieur du moteur et l'extérieur n'est pas suffisant pour permettre une telle évacuation de l'air, il peut être nécessaire de comprimer l'air prélevé grâce à un module de compression intégré à la pompe.

La figure 3 représente une variation de réalisation de ces moyens d'injection de l'air. Dans ce mode, le capot primaire 34 présente à son extrémité aval une pluralité d'orifices de sortie 56 débouchant vers le canal secondaire en aval de la section de col. Ces orifices de sortie 56 sont de préférence régulièrement espacés autour de l'axe longitudinal de la turbomachine et sont raccordés à un diffuseur annulaire 58 centré sur ce même axe. Le diffuseur 58 est quant à lui relié à la sortie 48a de la pompe 48 par au moins un conduit 60.

On notera que les orifices d'entrée pourraient être remplacés par une unique fente annulaire, des écopes, des cavités poreuses ou tout autre système équivalent permettant de prélever de l'air de façon sensiblement homogène sur toute la circonférence du canal secondaire. On notera également qu'il peut être prévu de fermer de tels orifices d'entrée lorsqu'ils ne sont pas utilisés, par exemple à l'aide de volets articulés et commandés.

L'invention prévoit également de pouvoir fermer artificiellement la section de col 42. Cette opération consiste à prélever de l'air extérieur à la turbomachine, à le comprimer et à l'injecter au voisinage de la section de col 42 selon une direction sensiblement perpendiculaire voire opposée à celle du flux d'air s'écoulant dans le canal secondaire 38 de façon à réaliser une obstruction aérodynamique du débit d'air traversant la section de col.

Un mode de réalisation de mise en oeuvre d'une telle fermeture de la section de col est maintenant décrit en liaison avec les figures 1 et 4.

Les moyens de prélèvement d'air extérieur sont formés par au moins une entrée d'air extérieur 62 formée dans la nacelle 16 de la turbomachine et s'ouvrant à l'extérieur de celle-ci. Cette entrée d'air extérieur 62 est reliée à une entrée d'une pompe ayant un module de compression d'air et logée à l'intérieur du moteur par l'intermédiaire d'au moins un conduit 64 traversant le canal secondaire 38 en passant par exemple dans l'un des bras 66 de support de la nacelle 16. De préférence, une vanne de commande 67 est intercalée entre l'entrée d'air extérieur 62 et la pompe afin de réguler le débit d'air prélevé et injecté au voisinage de la section de col en fonction des régimes de fonctionnement de la turbomachine.

Comme représenté à la figure 1, la pompe peut être la même que celle utilisée pour prélever l'air destiné à l'opération d'ouverture de la section col précédemment décrite. Dans ce cas, cette pompe 48 comporte un module de compression pour comprimer l'air extérieur prélevé avant de l'injecter dans le canal secondaire.

Quant aux moyens d'injection de l'air extérieur au voisinage de la section de col, ils se composent d'une pluralité d'injecteurs d'air 66 qui sont régulièrement espacés autour de l'axe longitudinal 12 de la turbomachine et qui débouchent dans le canal secondaire 38 au voisinage de la section de col 42 selon une direction sensiblement perpendiculaire voire opposée à celle du flux d'air s'écoulant dans le canal secondaire. Par « au voisinage de la section de col », on entend que les injecteurs débouchent juste en amont de la section de col, voire au niveau de celle-ci (mais pas à son aval).

A cet effet, la pompe 48 possède une autre sortie 48b qui est reliée à un diffuseur annulaire 68 centré sur l'axe longitudinal 12 de la turbomachine et raccordé aux injecteurs d'air 66. En outre, comme plus précisément représenté à la figure 4, chaque injecteur d'air 66 est incliné d'un angle δ formé avec la veine intérieure de la tuyère (prise dans la direction amont vers aval) qui est au moins égal à 90° et pouvant atteindre 180° (ce qui correspond à une injection selon une direction opposée au flux d'air s'écoulant dans le canal secondaire).

En calibrant le débit d'air évacué par les injecteurs 66, il est possible de créer une obstruction aérodynamique du flux d'air s'écoulant au travers de la section de col 42. En effet, comme représenté à la figure 4, l'air évacué par les injecteurs 66 vient pénétrer dans le canal secondaire 38 et créé un débit de constriction schématisé par la ligne 70. Ainsi, lorsque les injecteurs d'air 66 sont actifs, la section efficace 72 de passage du flux d'air au travers de la section de col 42 est réduite par rapport à sa section moyenne 74 observée lorsque les injecteurs sont inactifs. Le degré d'amplitude d'une telle réduction de la section efficace de la section de col est directement lié au débit d'air délivré par les injecteurs 66 et à l'inclinaison (angle δ) de ces injecteurs par rapport à la direction d'écoulement du flux d'air s'écoulant dans le canal secondaire. Diminuer la section efficace de la section de col revient ainsi à réduire le débit d'air la traversant, et donc à fermer la section de col de la tuyère à partir de la même section géométrique de col.

On notera que les injecteurs d'air pourraient être remplacés par une unique fente annulaire centrée sur l'axe longitudinal de la turbomachine ou par tout autre système équivalent permettant d'injecter de l'air de façon sensiblement homogène sur toute la circonférence de la tuyère et selon une direction au moins perpendiculaire voire opposée à celle du flux d'air s'écoulant dans le canal secondaire.

## Revendications

1. Turbomachine à double flux (10) comportant un moteur à turbine à gaz (14) muni d'une soufflante (20) disposée selon un axe longitudinal (12) de la turbomachine et une nacelle annulaire (16) centrée sur l'axe longitudinal de la turbomachine et entourant le moteur de façon à délimiter avec celui-ci un canal annulaire (38) d'écoulement d'un flux froid traversant la turbomachine, la nacelle ayant une extrémité amont entourant la soufflante du moteur et une extrémité aval fixe formant une tuyère (40) d'éjection des gaz issus de la turbomachine, la tuyère ayant une section de col (42) correspondant à sa section transversale minimale, **caractérisée en ce qu'**elle comporte en outre: - une pompe (48); des moyens (44) de prélèvement d'air dans le canal (38) d'écoulement du flux froid en amont de la section de col (42) de la tuyère ; et
des moyens (52 ; 56) d'injection de l'air prélevé en aval de la section de col de la tuyère configurés pour injecter de l'air selon une direction sensiblement parallèle à celle du flux d'air s'écoulant dans le canal (38) d'écoulement du flux froid de façon à ouvrir artificiellement la section de col ;
des moyens (62) pour prélever et comprimer de l'air extérieur à la turbomachine, et
des moyens (66) d'injection de l'air prélevé au voisinage de la section de col (42) selon une direction sensiblement perpendiculaire voire opposée à celle du flux d'air s'écoulant dans le canal (38) d'écoulement du flux froid de façon à fermer artificiellement la section de col par obstruction aérodynamique du débit d'air traversant celle-ci,
les moyens de prélèvement d'air extérieur comportant au moins une entrée d'air extérieur (62) s'ouvrant à l'extérieur de la turbomachine et reliée à une entrée de ladite pompe (48) ayant un module de compression et logée à l'intérieur du moteur à turbine à gaz (14).

2. Turbomachine selon la revendication 1, dans laquelle les moyens de prélèvement d'air comportent une pluralité d'orifices d'entrée (44) s'ouvrant dans le canal (38) d'écoulement du flux froid et débouchant dans un collecteur annulaire (46) logé à l'intérieur du moteur à turbine à gaz (14), ledit collecteur étant relié à une entrée d'une pompe (48) ayant une sortie (48a) débouchant à l'intérieur du moteur.

3. Turbomachine selon la revendication 2, dans laquelle le moteur à turbine à gaz (14) comporte un capot primaire (34) centré sur l'axe longitudinal (12) de la turbomachine et un corps central (32) disposé concentriquement à l'intérieur du capot primaire, le capot primaire ayant à son extrémité aval une ouverture annulaire (52) s'ouvrant à l'intérieur du moteur et débouchant vers le canal (38) d'écoulement du flux froid en aval de la section de col (42) de la tuyère de façon à permettre une évacuation de l'air prélevé dans le canal d'écoulement du flux froid par différentiel de pression.

4. Turbomachine selon la revendication 2, dans laquelle le moteur à turbine à gaz (14) comporte un capot primaire (34) centré sur l'axe longitudinal (12) de la turbomachine et un corps central (32) disposé concentriquement à l'intérieur du capot primaire, le capot primaire ayant à son extrémité aval une pluralité d'orifices de sortie (56) débouchant vers le canal (38) d'écoulement du flux froid en aval de la section de col (42) de la tuyère et reliés à la sortie (48a) de la pompe (48) par un diffuseur annulaire (58) de façon à permettre une évacuation de l'air prélevé dans le canal d'écoulement du flux froid.

5. Turbomachine selon l'une quelconque des revendications 2 à 4, comportant en outre une vanne de commande (51) intercalée entre le collecteur (48) et la pompe (48).

6. Turbomachine selon l'une des revendications 1 à 5, dans laquelle la pompe (48) possède une sortie (48b) reliée par l'intermédiaire d'un diffuseur annulaire (68) à une pluralité d'injecteurs d'air (66) débouchant dans le canal (38) d'écoulement du flux froid au voisinage de la section de col (42) selon une direction sensiblement perpendiculaire voire opposée à celle du flux d'air s'écoulant dans ledit canal d'écoulement du flux froid.

7. Turbomachine selon l'une des revendications 1 à 6, comportant en outre une vanne de commande (67) intercalée entre l'entrée d'air extérieur (62) et la pompe (48).

8. Procédé de variation de la section de col de la tuyère à section fixe de turbomachine à double flux selon la revendication 1, **caractérisé en ce qu'**il consiste :
- pour ouvrir artificiellement la section de col, à prélever de l'air dans le canal d'écoulement du flux froid de la turbomachine en amont de la section de col et à l'injecter dans la tuyère en aval de la section de col afin d'en augmenter la section efficace ; et
- pour fermer artificiellement la section de col, à prélever de l'air extérieur à la turbomachine, à le comprimer et à l'injecter au voisinage de la section de col selon une direction sensiblement perpendiculaire voire opposée à celle du flux d'air s'écoulant dans le canal d'écoulement du flux froid de façon à réaliser une obstruction aérodynamique du débit d'air traversant la section de col ;
les phases d'ouverture et de fermeture de la section de col étant pilotées en fonction des régimes de fonctionnement de la turbomachine.

## Patentansprüche

1. Zweistrom-Turbomaschine (10), umfassend ein Gasturbinentriebwerk (14), das mit einem Gebläse (20), welches entlang einer Längsachse (12) der Turbomaschine angeordnet ist, ausgestattet ist, und eine ringförmige Gondel (16), welche um die Längsachse der Turbomaschine zentriert ist und das Triebwerk umgibt, um mit diesem einen ringförmigen Kanal (38) für das Strömen eines die Turbomaschine durchlaufenden kalten Stroms zu begrenzen, wobei die Gondel ein stromaufwärtiges Ende, welches das Gebläse des Triebwerks umgibt, und ein festes stromabwärtiges Ende, welches eine Düse (40) zum Ausstoßen der aus der Turbomaschine kommenden Gase bildet, aufweist, wobei die Düse einen Halsquerschnitt (42) aufweist, der ihrem Mindestquerschnitt entspricht, **dadurch gekennzeichnet, dass** sie ferner umfasst:
eine Pumpe (48),
Mittel (44) zur Entnahme von Luft aus dem Kanal (38) für das Strömen des kalten Stroms stromauf des Halsquerschnittes (42) der Düse, und
Mittel (52; 56) zum Einleiten der entnommenen Luft stromab des Halsquerschnittes der Düse, die dazu ausgebildet sind, Luft in einer Richtung im Wesentlichen parallel zu der des Luftstroms, welcher in dem Kanal (38) für das Strömen des kalten Stroms strömt, einzuleiten, um den Halsquerschnitt künstlich zu öffnen,
Mittel (62) zum Entnehmen und Komprimieren von außerhalb der Turbomaschine befindlicher Luft, und
Mittel (66) zum Einleiten der entnommenen Luft in der Nähe des Halsquerschnittes (42) in einer Richtung im Wesentlichen senkrecht, sogar entgegengesetzt zu der des Luftstroms, der in dem Kanal (38) für das Strömen des kalten Stroms strömt, um den Halsquerschnitt durch aerodynamisches Blockieren der ihn durchströmenden Luftmenge künstlich zu schließen,
wobei die Mittel zur Entnahme von Außenluft wenigstens einen Außenlufteinlass (62) umfassen, der sich außerhalb der Turbomaschine öffnet und mit einem Eingang der Pumpe (48) verbunden ist, die ein Kompressionsmodul aufweist und innerhalb des Gasturbinentriebwerks (14) aufgenommen ist.

2. Turbomaschine nach Anspruch 1, bei der die Luftentnahmemittel eine Vielzahl von Einlassöffnungen (44) umfassen, die sich in den Kanal (38) für das Strömen des kalten Stroms öffnen und in einen ringförmigen Sammler (46), welcher innerhalb des Gasturbinentriebwerks (14) aufgenommen ist, münden, wobei der Sammler mit einem Eingang der Pumpe (48) verbunden ist, die einen innerhalb des Triebwerks ausmündenden Ausgang (48a) aufweist.

3. Turbomaschine nach Anspruch 2, bei der das Gasturbinentriebwerk (14) eine Primärverkleidung (34), die um die Längsachse (12) der Turbomaschine zentriert ist, und einen mittleren Körper (32), der innerhalb der Primärverkleidung konzentrisch angeordnet ist, umfasst, wobei die Primärverkleidung an ihrem stromabwärtigen Ende eine ringförmige Öffnung (52) aufweist, die sich innerhalb des Triebwerks öffnet und in Richtung des Kanals (38) für das Strömen des kalten Stroms stromab des Halsquerschnittes (42) der Düse ausmündet, um ein Abführen der aus dem Kanal für das Strömen des kalten Stroms entnommenen Luft durch Druckunterschied zu ermöglichen.

4. Turbomaschine nach Anspruch 2, bei der das Gasturbinentriebwerk (14) eine Primärverkleidung (34), die um die Längsachse (12) der Turbomaschine zentriert ist, und einen mittleren Körper (32), der innerhalb der Primärverkleidung konzentrisch angeordnet ist, umfasst, wobei die Primärverkleidung an ihrem stromabwärtigen Ende eine Vielzahl von Auslassöffnungen (56) aufweist, die in Richtung des Kanals (38) für das Strömen des kalten Stroms stromab des Halsquerschnittes (42) der Düse ausmünden und mit dem Ausgang (48a) der Pumpe (48) über einen Ringdiffusor (58) verbunden sind, um ein Abführen der aus dem Kanal für das Strömen des kalten Stroms entnommenen Luft zu ermöglichen.

5. Turbomaschine nach einem der Ansprüche 2 bis 4, ferner umfassend ein Steuerventil (51), das zwischen dem Sammler (46) und der Pumpe (48) eingefügt ist.

6. Turbomaschine nach einem der Ansprüche 1 bis 5, bei der die Pumpe (48) einen Ausgang (48b) besitzt, der mittels eines Ringdiffusors (68) mit einer Vielzahl von Luftinjektoren (66) verbunden ist, die in den Kanal (38) für das Strömen des kalten Stroms in der Nähe des Halsquerschnittes (42) in einer Richtung im Wesentlichen senkrecht, sogar entgegengesetzt zu der des Luftstroms, welcher in dem Kanal für das Strömen des kalten Stroms strömt, münden.

7. Turbomaschine nach einem der Ansprüche 1 bis 6, ferner umfassend ein Steuerventil (67), das zwischen dem Außenlufteinlass (62) und der Pumpe (48) eingefügt ist.

8. Verfahren zum Variieren des Halsquerschnittes der Düse mit festem Querschnitt einer Zweistrom-Turbomaschine nach Anspruch 1, **dadurch gekennzeichnet, dass** es darin besteht,
- um den Halsquerschnitt künstlich zu öffnen, Luft aus dem Kanal für das Strömen des kalten Stroms der Turbomaschine stromauf des Halsquerschnittes zu entnehmen und sie in die Düse stromab des Halsquerschnittes einzuleiten, um dessen Wirkungsquerschnitt zu vergrößern, und,
- um den Halsquerschnitt künstlich zu schließen, außerhalb der Turbomaschine befindliche Luft zu entnehmen, sie zu komprimieren und in der Nähe des Halsquerschnittes in einer Richtung im Wesentlichen senkrecht, sogar entgegengesetzt zu der des Luftstroms, welcher in dem Kanal für das Strömen des kalten Stroms strömt, einzuleiten, um ein aerodynamisches Blockieren der den Halsquerschnitt durchströmenden Luftmenge zu vollziehen,
wobei die Phasen des Öffnens und Schließens des Halsquerschnittes in Abhängigkeit von den Betriebsdrehzahlen der Turbomaschine gesteuert werden.

## Claims

1. A bypass turbomachine (10) comprising a gas turbine engine (14) provided with a fan (20) disposed on a longitudinal axis (12) of the turbomachine, and with an annular nacelle (16) centered on the longitudinal axis of the turbomachine and surrounding the engine in such a manner as to co-operate therewith to define an annular channel (38) along which a cold stream flows on passing through the turbomachine, the nacelle having an upstream end surrounding the fan of the engine and a stationary downstream end forming a nozzle (40) for ejecting the gas from the turbomachine, the nozzle having a throat section (42) corresponding to its smallest cross-section, **characterised in that** the turbomachine further comprises:
• A pump (48) ;
• channel air intake means (44) for taking air from the cold stream flow channel (38) upstream from the throat section (42) of the nozzle;
• channel air injector means (52;56) for injecting the taken-in channel air downstream from the nozzle throat section configured to inject air along a direction that is substantially parallel to the flow direction of the air stream in the cold stream flow channel (38) so as to open the throat section artificially;
• outside air intake means (62) for taking air from outside the turbomachine and for compressing it; and
• outside air injector means (66) for injecting the taken-in air into the vicinity of the throat section (42) in a direction that is substantially perpendicular or opposite to the flow direction of the air stream in the cold stream flow channel (38) so as to close the throat section artificially by aerodynamically obstructing the flow rate of air passing therethrough, the outside air intake means (62) comprising at least one outside air inlet opened onto the outside of the turbomachine and connected to an inlet of said pump (48) having a compressor module and housed inside the gas turbine engine (14).

2. A turbomachine according to claim 1, in which the channel air intake means comprising a plurality of inlet orifices (44) opening out into the cold stream flow channel (38) and leading to an annular manifold (46) housed inside the gas turbine engine (14), said manifold being connected to an inlet of a pump having an outlet (48a) opening out to the inside of the engine.

3. A turbomachine according to claim 2, in which the gas turbine engine (14) has a primary cowl (34) centered on the longitudinal axis (12) of the turbomachine, and a central body (32) disposed concentrically inside the primary cowl, the primary cowl having an annular opening (52) at its downstream end leading from the inside of the engine and opening out into the cold stream flow channel (38) downstream from the nozzle throat section (42) so as to enable the air taken from the cold stream flow channel to be exhausted by means of a pressure difference.

4. A turbomachine according to claim 2, in which the gas turbine engine (14) has a primary cowl (34) centered on the longitudinal axis of the turbomachine, and a central body (32) disposed concentrically inside the primary cowl, the primary cowl having a plurality of outlet (56) orifices at its downstream end opening out into the cold stream flow channel (38) downstream from the nozzle throat section (42) and connected to the outlet (48a) of the pump (48) via an annular diffuser (58) so as to enable the air taken from the cold stream flow channel to be exhausted.

5. A turbomachine according to any of claims 2 to 4, further including a control valve (51) interposed between the manifold (46) and the pump (48).

6. A turbomachine according to any of claims 1 to 5, in which the pump (48) possesses an outlet (48b) connected via an annular diffuser (68) to a plurality of air injectors (66) opening out into the cold stream flow channel (38) in the vicinity of its throat section (42) in a direction that is substantially perpendicular or even opposite to the flow direction of the air stream flowing in said cold stream flow channel.

7. A turbomachine according to any of claims 1 to 6, further including a control valve (67) interposed between the outside air inlet (62) and the pump (48).

8. A method of varying the throat section of the nozzle of fixed section in a bypass turbomachine according to claim 1, **characterised in that** the method consists:
• for artificially opening the throat section, in taking air from the cold stream flow channel of the turbomachine upstream from the throat section and injecting that air into the nozzle downstream from the throat section in order to increase its effective section; and
• in order to artificially close the throat section, in taking air from outside the turbomachine, in compressing it, and in injecting it into the vicinity of the throat section along a direction that is substantially perpendicular or even opposite to the direction of the air stream flowing in the cold stream flow channel so as to create an aerodynamic obstruction to the flow of air passing through the throat section, the operations of opening and closing the throat section being controlled as a function of the operating speeds of the turbomachine.
